(19) Europäisches Patentamt / European Patent Office / Office européen des brevets

(11) **EP 3 812 800 A1**

(12) **EUROPEAN PATENT APPLICATION**
published in accordance with Art. 153(4) EPC

(43) Date of publication:
**28.04.2021 Bulletin 2021/17**

(51) Int Cl.:
*G01W 1/00* (2006.01)       *G01W 1/12* (2006.01)

(21) Application number: **19822062.6**

(22) Date of filing: **14.05.2019**

(86) International application number:
**PCT/JP2019/019019**

(87) International publication number:
**WO 2019/244510 (26.12.2019 Gazette 2019/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.06.2018 JP 2018116470**

(71) Applicant: FURUNO ELECTRIC CO., LTD.
**Nishinomiya-City**
**Hyogo 662-8580 (JP)**

(72) Inventors:
• **TAKASHIMA, Yuya**
**Nishinomiya-City, Hyogo 662-8580 (JP)**
• **MINOWA, Masahiro**
**Nishinomiya-City, Hyogo 662-8580 (JP)**

(74) Representative: **Müller Hoffmann & Partner**
**Patentanwälte mbB**
**St.-Martin-Strasse 58**
**81541 München (DE)**

(54) **CLOUD OBSERVATION DEVICE, CLOUD OBSERVATION SYSTEM, CLOUD OBSERVATION METHOD, AND PROGRAM**

(57)     The purpose is to provide a cloud observation system capable of appropriately specifying the position and altitude of clouds. A cloud observation device 11 comprising an acquisition module 12 configured to acquire whole sky images G3, and G4 imaged by a plurality of whole sky cameras 10 arranged at positions P1 and P2 different from each other with known positional relationships, a cloud distribution data generation module 13 configured to generate cloud distribution data B3 and B4 representing the distribution of clouds for each whole sky image, a scale determination module 14 configured to enlarge or reduce the cloud distribution data B3 and B4 to determine the scale on which clouds in the respective cloud distribution data B3 and B4 existing in the evaluation target region Ar1 of the state where the known positional relationships are maintained, and mostly overlap with each other, and a target cloud determination module 15a configured to determine a target cloud from the clouds included in the respective cloud distribution data B3, and B4 which are enlarged or reduced based on the scale.

FIG. 2

**Description**

TECHNICAL FIELD

The present disclosure relates to a cloud observation device, a cloud observation system, a cloud observation method, and a program.

BACKGROUND ART

Conventional cloud observation mainly uses satellites. Because satellites observe clouds from the sky, they cannot obtain detailed distributions of clouds near the ground. Therefore, it is not possible to grasp the amount and time of solar radiation on the ground.

It is known to use a ground-based whole sky camera as an alternative to satellites. For example, Patent Document 1 describes that the speed of clouds and the direction in which clouds flow are determined by imaging the sky with one whole sky camera, obtaining whole sky images at different times, and tracking the movement of the same cloud reflected in the whole sky image.

Patent Document 2 discloses a method of calculating the height of a cloud on the vertical side of a facility whose distance from two whole sky cameras is known by using two whole sky cameras.

[Reference Documents of Conventional Art]

[Patent Documents]

[Patent Document 1] JPS57-160681U
[Patent Document 2] JP2012-242322A

DESCRIPTION OF THE DISCLOSURE

Problems to be Solved by the Disclosure

However, in the method of Patent Document 1, since the altitude of the cloud is unknown, the altitude is tentatively determined, and the speed of the cloud is calculated based on the tentatively determined altitude, so that the calculation result is not accurate.

In addition, the method of Patent Document 2 seems to be able to calculate only the height of a cloud located directly above a place where the distance from the camera is known.

It is an object of the present disclosure to provide a cloud observation device, a cloud observation system, a cloud observation method, and a program capable of appropriately specifying the position of a cloud including an altitude.

Summary and Effect of the Disclosure

The cloud observation device of the present disclosure comprising, an acquisition module configured to acquire a whole sky image imaged by a plurality of whole sky cameras arranged at positions different from each other with a known positional relationship, a cloud distribution data generating module configured to generate cloud distribution data representing the distribution of clouds for each of the whole sky images, a scale determination module configured to enlarge or reduce the cloud distribution data to determine a scale at which the clouds in each of the cloud distribution data existing in an evaluation target region in the state where the known positional relationship is maintained, most overlap with each other, and a target cloud determination module configured to determine a target cloud from clouds included in each cloud distribution data enlarged or reduced on the basis of the scale.

In this way, the cloud distribution data is enlarged or reduced to determine the scale on which the clouds in each cloud distribution data existing in the evaluation target region in the state where the known positional relationship is maintained, most overlap with each other, so that the position (including cloud height and horizontal distance) of an arbitrary target cloud can be specified.

BRIEF DESCRIPTION OF DRAWINGS

FIG. 1 illustrates a configuration of a cloud observation system of the present disclosure;

FIG. 2 is a block diagram illustrating a cloud observation device;

FIG. 3 is an illustration of a whole sky image at a low cloud altitude, the horizontal distance from the camera position to the cloud and the cloud altitude, and cloud distribution data on an appropriate scale;

FIG. 4 is an illustration of a whole sky image at high cloud altitudes, the horizontal distance from the camera position to the cloud and the cloud altitude, and cloud distribution data on an appropriate scale;

FIG. 5 shows a whole sky image obtained from each whole sky camera;

FIG. 6 shows an example where the scale of the cloud distribution data is smaller than an appropriate scale;

FIG. 7 shows an example where the scale of the cloud distribution data is larger than an appropriate scale;

FIG. 8 shows an example in which the scale of the cloud distribution data is an appropriate scale, and shows the evaluation target region;

FIG. 9 illustrates a method for determining the scale of cloud distribution data;

FIG. 10 is an illustration of one method of determining the evaluation target region;

FIG. 11 shows three cloud distribution data from three whole sky cameras;

FIG. 12 shows an example of a cloud image displayed based on two cloud distribution data;

FIG. 13 shows an example of a cloud image displayed based on three cloud distribution data;

FIG. 14 is an illustration of a malfunction when the sun is in the whole sky image;

FIG. 15 illustrates the luminance characteristics of the sun and clouds in a whole sky image;

FIG. 16 illustrates the calculation of shade areas;

FIG. 17 illustrates shade determination for a designated land area; and

FIG. 18 is a flowchart illustrating a cloud observation method of the present disclosure.


MODES FOR CARRYING OUT THE DISCLOSURE

One embodiment of the present disclosure will now be described with reference to the drawings.


Cloud observation system

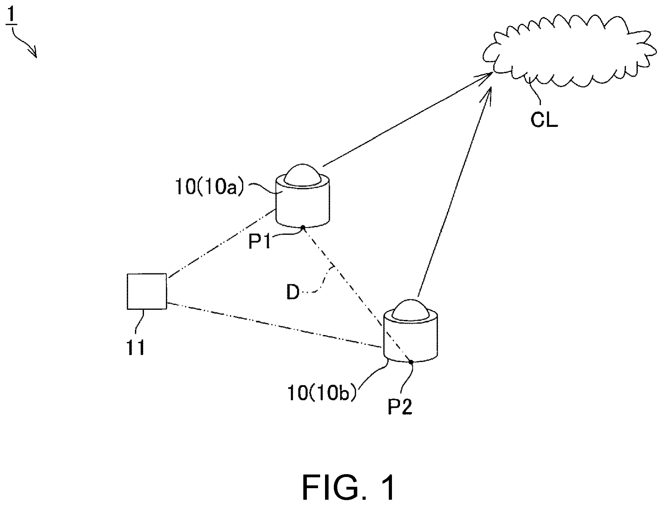

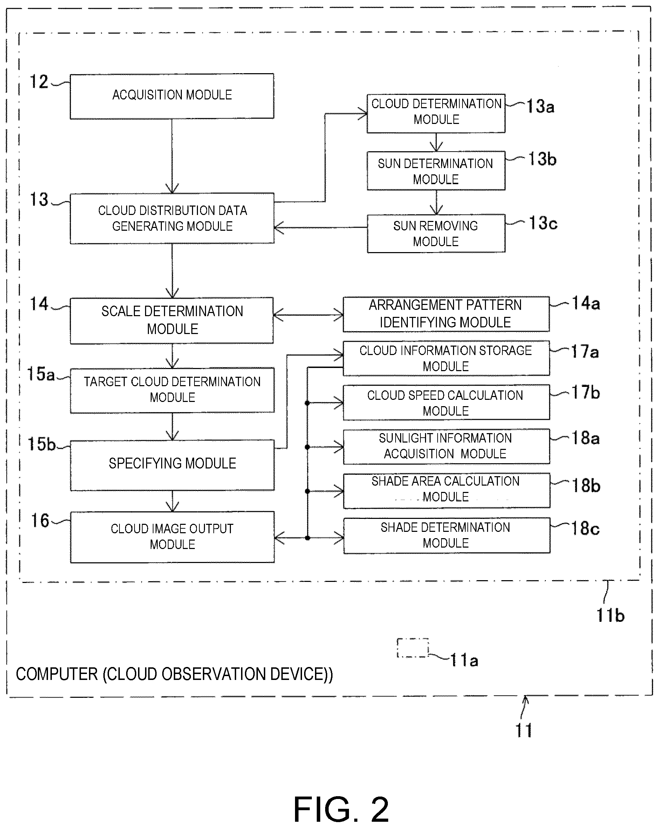

As shown in FIG. 1 and FIG. 2, the cloud observation system 1 of the present embodiment includes a plurality of whole sky cameras 10, and a cloud observation device 11 for processing a plurality of whole sky images imaged by the respective whole sky cameras 10.

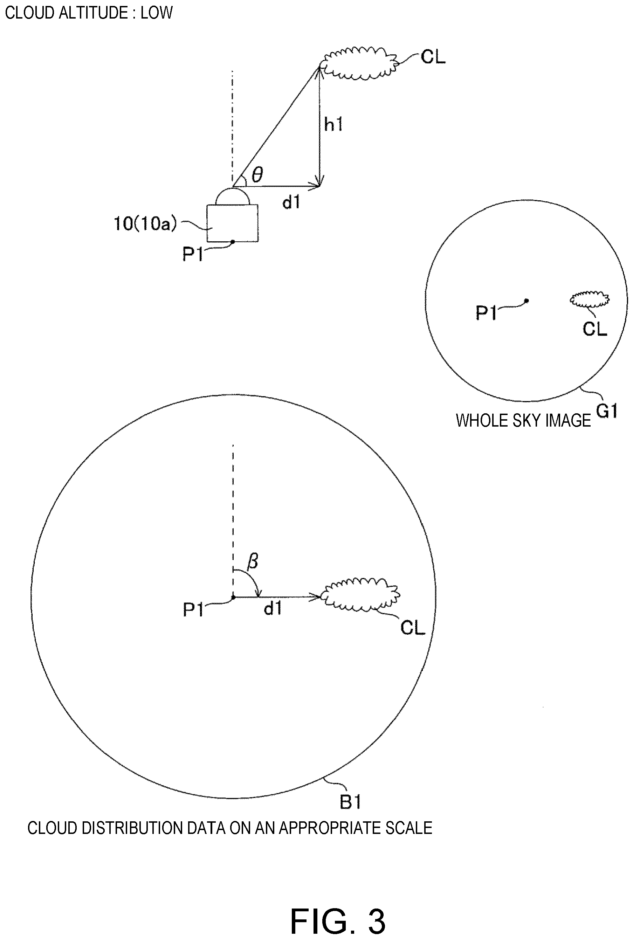

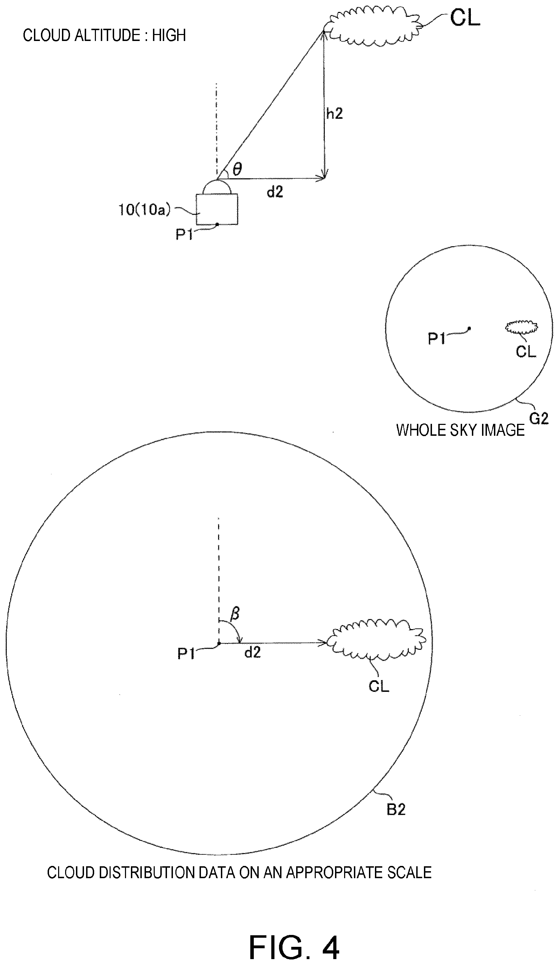

The plurality of whole sky cameras 10 is arranged at different positions where the positional relationship is known. In the example of FIG. 1, two whole sky cameras 10a and 10b are disposed, but the present invention is not limited thereto. The number of cameras can be appropriately changed as long as there are two or more cameras. In the example of FIG. 1, the first whole sky camera 10a is disposed at the point P1 and the second whole sky camera 10b is disposed at the point P2. The relationship between the distance D and the azimuth between the two points P1 and P2 is previously stored. The whole sky camera 10 faces right above and images a circumference of 360°. As shown in FIG. 3 and FIG. 4, the relationship between the whole sky camera 10 and the target cloud CL can be represented by an azimuth $\beta$ with reference to a reference azimuth such as north and an elevation angle $\theta$. In the whole sky images G1 and G2 obtained from the whole sky camera 10 (10a, 10b), the center is placed right above (elevation angle 90°), and the elevation angle $\theta$ decreases from the center towards the edge of the image. The whole sky images G1 and G2 have information on the distribution of clouds whose center is a camera position and the position of the clouds is expressed in a horizontal plane.

FIG. 3 shows an example where the cloud altitude is low. As shown in the figure, when the cloud altitude is h1, the horizontal distance d1 from the camera position P1 to the cloud CL is represented by $d1= h1/\tan\theta$. FIG. 4 shows an example in which the cloud altitude is higher than the example in FIG. 3. As shown in the figure, when the cloud altitude is h2 (h2 > h1), the horizontal distance from the camera position P1 to the cloud CL becomes d2 (d2 > d1). However, as shown in FIG. 3 and FIG. 4, even when the cloud heights are different, as long as the azimuth $\beta$ and the elevation angle $\theta$ from the camera position P1 to the cloud CL are the same, the obtained whole sky images G1 and G2 are the same. Therefore, the position and altitude of the cloud cannot be specified by only one whole sky image, and the observable range changes according to the actual altitude of the cloud.

The cloud observation device 11 implemented by the computer of the present embodiment specifies the position and altitude of clouds from a plurality of whole sky images. Specifically, as shown in FIG. 2, the cloud observation device 11 includes an acquisition module 12, a cloud distribution data generating module 13, a scale determination module 14, a target cloud determination module 15a, and a specifying module 15b. Each of these modules 12, 13, 14, 15a and 15b is implemented by a computer having a processor 11b such as a Central Processing Unit (CPU), a memory 11a, various interfaces, etc., in which the processor 11b executes a program previously stored in the memory 11a, whereby software and hardware are cooperatively implemented.

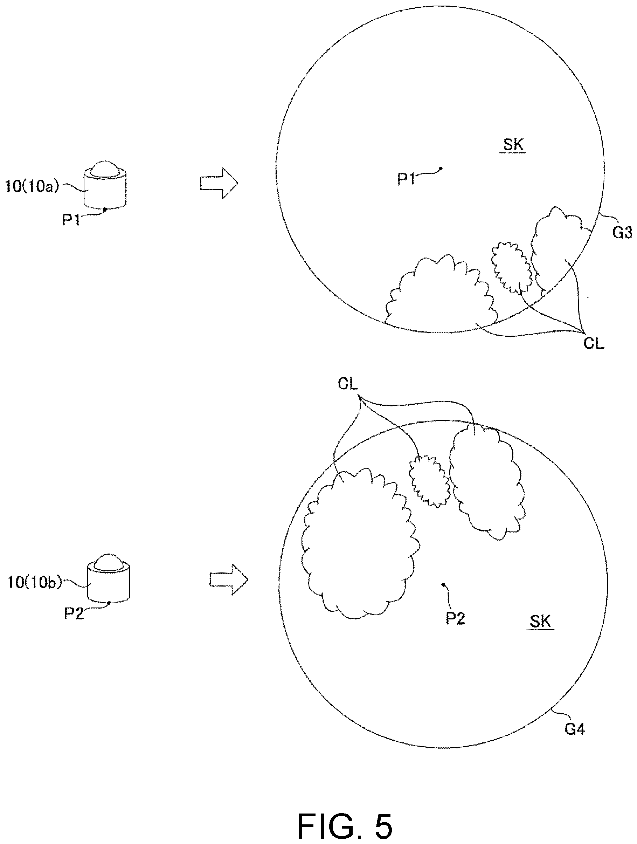

The acquisition module 12 shown in FIG. 2 acquires a plurality of whole sky images G3 and G4 imaged by whole sky cameras 10 (10a, 10b) disposed at different positions P1 and P2 whose positional relationships are known as shown in FIG. 5. If the whole sky images G3 and G4 can be acquired from the respective whole sky cameras (10a, 10b), the communication path and the acquisition timing are arbitrary. The whole sky images G3 and G4 contain RGB components, and a blue sky SK and a white cloud CL are imaged.

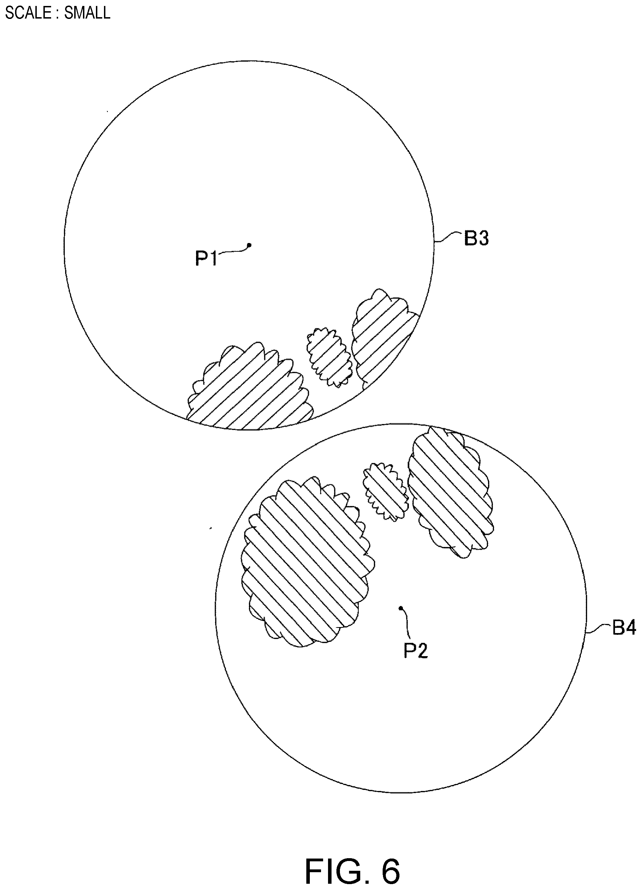

The cloud distribution data generating module 13 shown in FIG. 2, based on the whole sky image G3 and G4 acquired by the acquisition module 12, generates cloud distribution data B3 and B4 representing the distribution of clouds for each whole sky image G3 and G4 respectively, as shown in FIG. 6. The center of the cloud distribution data B3 and B4 is the camera position P1 and P2 respectively, and the position of the cloud CL is represented by a horizontal plane. Specifically, the cloud distribution data generation module 13 identifies pixels that are clouds from the whole sky image, and generates cloud distribution data B3 and B4 indicating the distribution of clouds in the whole sky image. In the present embodiment, the whole sky image is binarized to generate a cloud distribution image in which the value 1 is a cloud and the value 0 is not a cloud as cloud distribution data. As shown in FIG. 6, the area where the cloud exists in the cloud distribution data B3 is indicated by a diagonal line from the lower left to the upper right, and the area where the cloud exists in the cloud distribution data B4 is indicated by a diagonal line from the upper left to the lower right.

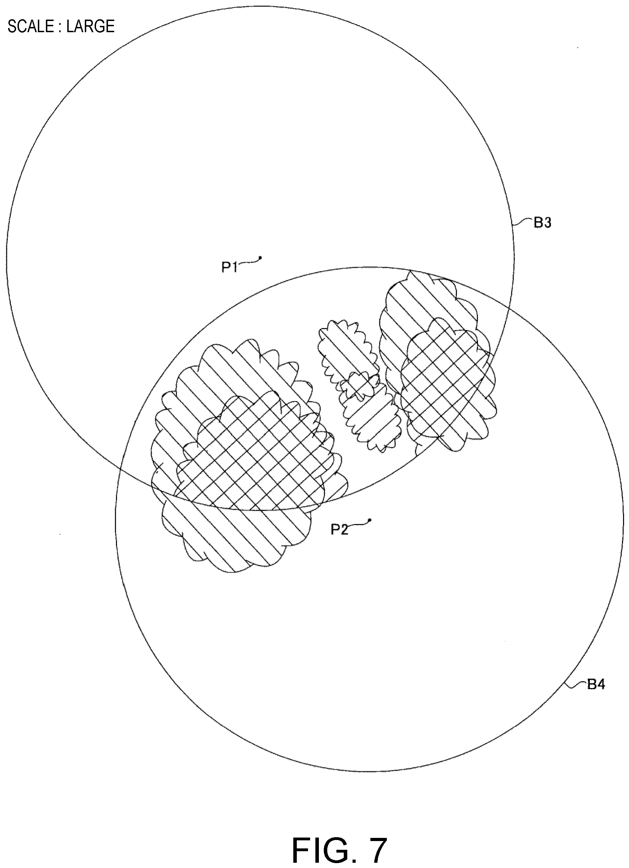

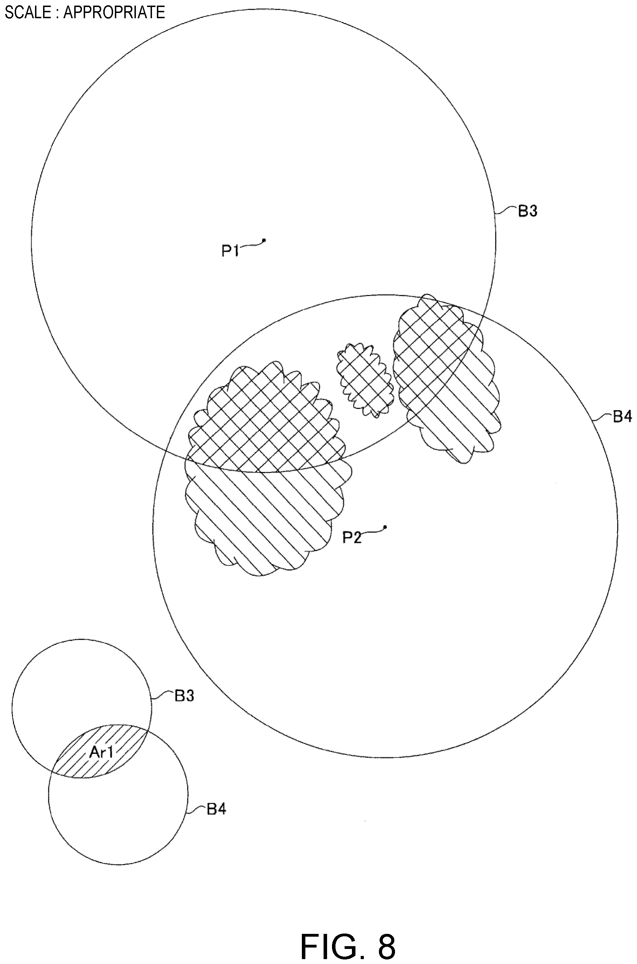

The scale determination module 14 shown in FIG. 2 determines the scales of the cloud distribution data B3 and B4 in which the position of the cloud including the altitude of the cloud is accurate. The scale determination module 14 determines the scale at which the clouds in the respective cloud distribution data B3 and B4 existing in the evaluation target region Ar1 in the state where the known positional relationship is maintained, and overlaps most. Specifically, as shown in FIG. 6, the scale determination module 14 arranges the cloud distribution data B3 and B4 so as to maintain the known positional relationship. Specifically, the first cloud distribution data B3 and the second cloud distribution data B4 are arranged so that the positional relationship between the center of the first cloud distribution data B3 and the center of the second cloud distribution data B4 matches the data indicating the known camera position. Next, the scale determination module 14 enlarges or reduces the cloud distribution data B3 and B4 with the center as a base point, and as shown in FIG.. 7 and FIG. 8, overlaps the outer edges of the cloud distribution data B3 and B4 to determine the scale on which the clouds existing in the evaluation target region Ar1 overlap most. The evaluation target region Ar1 is a range in which the respective cloud distribution data B3 and B4 overlap, as illustrated by hatched lines in the lower left portion of FIG. 8. FIG. 8 shows an example in which the scales of the cloud distribution data B3 and B4 are appropriate. FIG. 6 shows an example in which the scales of the cloud distribution data B3 and B4 are smaller than the proper values. FIG. 7 shows an example in which the scales of the cloud distribution data B3 and B4 are larger than an appropriate scale. The scale determination module 14 enlarges or reduces the cloud distribution data B3 and B4 to change the scales a plurality of times, and calculate a matching value of the position of the cloud existing in the evaluation target region Ar1 in each scale. The scale determination module 14 searches the scale with the highest matching value and determines the scale.

As the above modification, the scale may be determined by enlarging or reducing the cloud distribution data B3 and B4 from a point other than the center, which is the whole sky camera position, and shifting the positional relationship of the whole sky camera in each of the enlarged or reduced cloud distribution data B3 and B4 to match a known positional relationship.

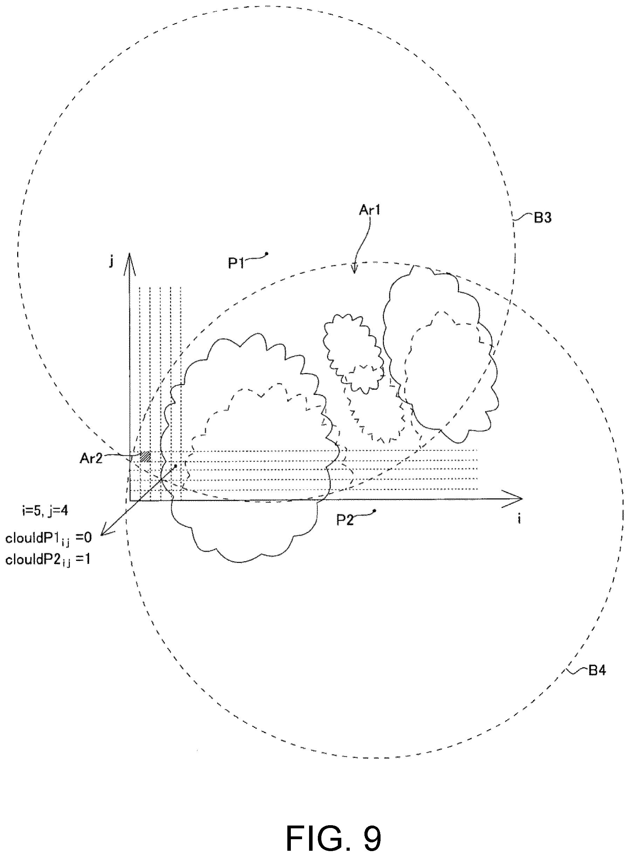

An example of a method of calculating a matching value will be described. As shown in FIG. 9, the evaluation target region Ar1 is divided into a plurality of unit regions Ar2 arranged in a matrix. In the figure, a single unit region Ar2 is illustrated by oblique lines. For each unit region Ar2, a matching value is calculated to determine whether the presence of clouds in the first cloud distribution data B3 and the presence of clouds in the second cloud distribution data B4 overlap. To determine a scale in which the sum of matching values of all unit regions is the highest.

Specifically, the presence or absence of clouds in one unit region Ar2 is indicated by variables $cloudP1_{ij}$ and $cloudP2_{ij}$. The presence or absence of clouds in the first cloud distribution data B3 is represented by $cloudP1_{ij}$, and the presence or absence of clouds in the second cloud distribution data B4 is represented by $cloudP2_{ij}$. In order to distinguish the unit region Ar2, the i coordinate and the j coordinate are shown. The unit region Ar2 indicated by a black circle in FIG. 9 is i = 5, j = 4, and the presence of the cloud is expressed as $cloudP1_{54} = 0$ and $cloudP2_{54} = 1$. If there is a cloud, 1 is stored in the variable, otherwise 0 is stored in the variable. The total score_h of the matching values can be expressed by the following equation (1). A large score_h indicates consistency.

$$score\_h = \frac{1}{M \cdot N} \sum_{j=1}^{M} \sum_{i=1}^{N} \left\{ 1 - \left| clouldP1_{ij} - couldP2_{ij} \right| \right\} \quad \cdots \quad (1)$$

N is the number of unit regions on the i axis (grid count). M is the number of unit regions on the j axis (grid count). Here, a matching value indicating whether the presence of clouds in the unit region Ar2 overlaps is $\{1 - |clouldP1_{ij} - clouldP2_{ij}|\}$.

The target cloud determination module 15a shown in FIG. 2 determines a target cloud from clouds included in each cloud distribution data enlarged or reduced on the basis of the scale. In the determination method, clouds designated from the outside such as a user or the like may be used as target clouds, or the most overlapping cloud among clouds included in each cloud distribution data may be regarded as the same cloud, and the same cloud may be used as the target cloud.

The specifying module 15b shown in FIG. 2 specifies the position of the target cloud (coordinate position in horizontal plane, including altitude) on the basis of the cloud distribution data B3 and B4 enlarged or reduced on the basis of the scale determined by the scale determining module 14, the positions P1 and P2 of the plurality of whole sky cameras 10, the elevation angle of the target cloud with respect to the whole sky camera 10, and the azimuth of the target cloud with respect to the whole sky camera 10. The position of the cloud in the horizontal plane can be calculated by the coordinates of the camera position, the distance from the center of the cloud distribution data, and the azimuth. The altitude of the cloud can be calculated by the distance from the center of the cloud distribution data and the elevation angle. Here, since the elevation angle is known for each pixel of the whole sky image, the value of the trigonometric function with the elevation angle as an argument may be obtained after calculating the elevation angle, or the value of the trigonometric function may be previously stored for each pixel, and the value of the corresponding trigonometric function may be used without obtaining the elevation angle.

Thus, the scale, i.e., the cloud height and the horizontal distance from the camera to the cloud can be specified.

In the above description, matching of two cloud distribution data is described as an example, but matching of three or more cloud distribution data can be realized by the same method.

Modified example of the evaluation target area

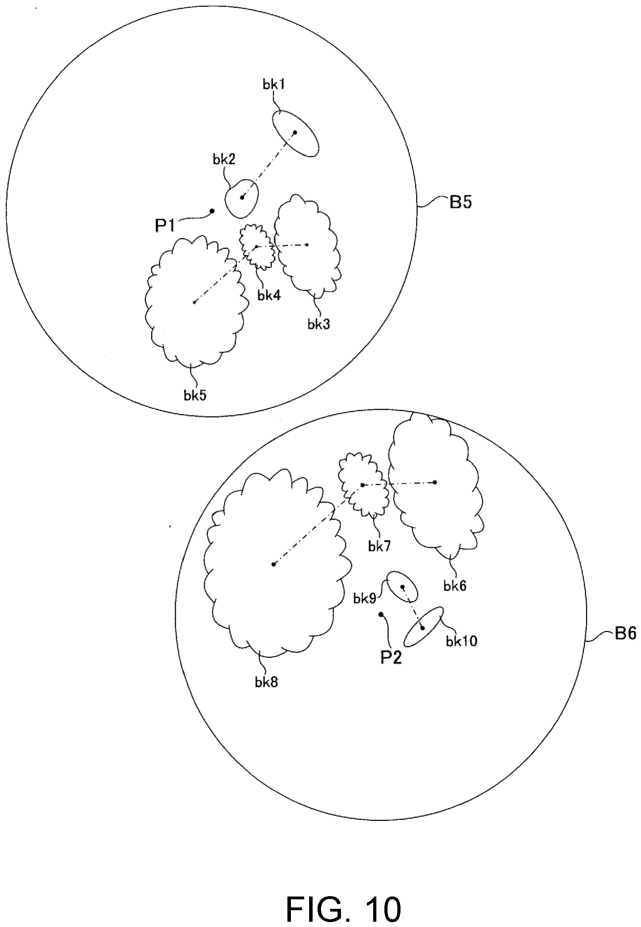

The evaluation target region Ar1 is a range in which the respective cloud distribution data B3 and B4 overlap, as illustrated in the lower left portion of FIG. 8, but is not limited thereto. For example, as shown in FIG. 10, an arrangement pattern identifying module 14a (see FIG. 2) may be provided for recognizing arrangement patterns of a plurality of cloud masses included in the cloud distribution data B5 and B6. As an example of recognition of an arrangement pattern, a cloud mass (bk1 ~ bk10) is recognized by using a labeling algorithm or the like, the center of each cloud mass is recognized, an arrangement pattern is determined based on the relationship of angles between straight lines connecting the centers of the cloud masses, and whether or not the determined arrangement patterns coincide with each other is determined. In this case, as shown in FIG. 10, the evaluation target region Ar2 is set to a region including clouds (bk3 ~ 5, bk6 ~ bk8) whose arrangement patterns match.

In this way, when a plurality of cloud masses is present, clouds (bk1 ~ 2, bk9 ~ 10) which are noise that does not match the arrangement pattern are excluded to improve the accuracy of the matching determination of the cloud distribution data.

Display of the cloud image

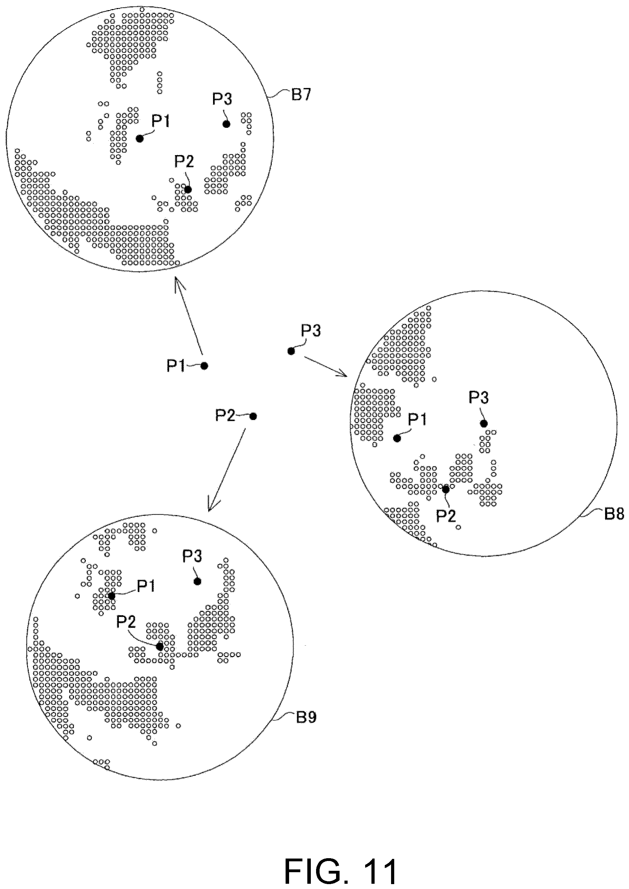

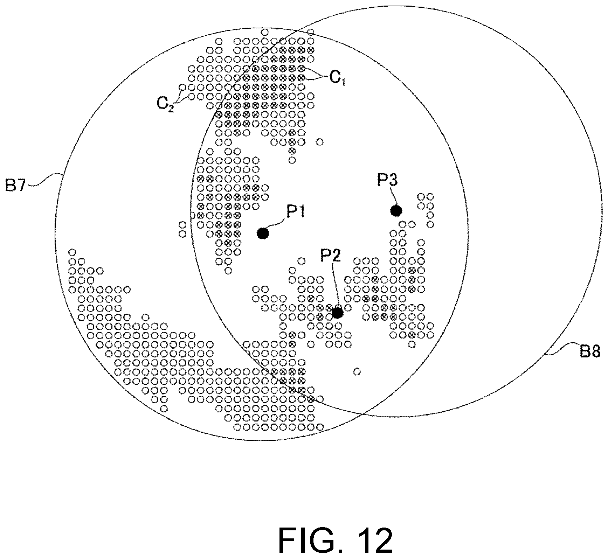

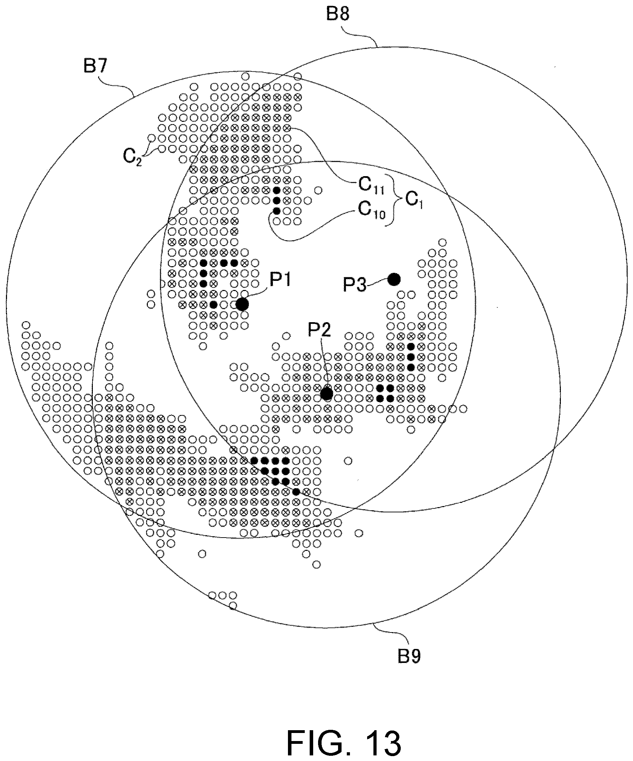

The system 1 may have a cloud image output module 16 (see FIG. 2) for outputting a cloud image (see FIG. 12 and FIG. 13) indicating a cloud distribution on the basis of the cloud distribution data B7, B8, and B9 (see FIG. 11) whose scale has been determined. The cloud image output module 16 may display a cloud image on a display or may output image data to a remote display or computer. As illustrated in FIG. 11, the cloud distribution data B7 is data obtained from the whole sky image imaged at the camera position P1, the cloud distribution data B8 is data obtained from the whole sky image imaged at the camera position P3, and the cloud distribution data B9 is data obtained from the whole sky image imaged at the camera position P2. Circles in each cloud distribution data indicate the presence of clouds.

Display mode of cloud image

By the way, a thin cloud or a low altitude cloud may not appear in a plurality of whole sky images, but may appear in only one whole sky image. It may be useful to know the existence of such clouds as well as clouds appearing in a plurality of whole sky images.

Therefore, as shown in FIG. 12 and FIG. 13, it is useful to change the display mode of the clouds which do not match the plurality of cloud distribution data and exist in the single cloud distribution data and the clouds which match the plurality of cloud distribution data. This is because it makes it easier to see. FIG. 12 shows a cloud image based on two cloud distribution data B7 and B8. In the example of FIG. 12, the plurality of pieces of cloud distribution data include first cloud distribution data B7 and second cloud distribution data B8. The clouds included in the first cloud distribution data B7 include a first cloud $C_1$ matched with the second cloud distribution data B8 and a second cloud $C_2$ not matched with the second cloud distribution data B8. The cloud image output module 16 outputs a cloud image so that display modes of the first cloud $C_1$ and the second cloud $C_2$ are different. In the example of FIG. 12, for convenience of explanation,

the first cloud $C_1$ is represented by a circle having a cross mark, and the second cloud $C_2$ is represented by a circle without a cross mark, but the display mode can be changed appropriately. For example, different colors or densities may be used.

FIG. 13 shows a cloud image based on the three cloud distribution data B7, B8, and B9. When displaying a cloud image based on three or more cloud distribution data, it is useful to change the display mode of the first cloud $C_1$ according to the number of matched cloud distribution data. That is, in the example of FIG. 13, the plurality of cloud distribution data includes the first cloud distribution data B7 and the plurality of second cloud distribution data B8 and B9. The clouds included in the first cloud distribution data B7 include a first cloud $C_1$ matched with the plurality of second cloud distribution data B8 and B9 and a second cloud $C_2$ not matched with the plurality of second cloud distribution data B8 and B9. The cloud image output module 16 outputs a cloud image so that display modes of the first cloud $C_1$ and the second cloud $C_2$ are different. Furthermore, the first cloud $C_1$ is displayed in a display mode corresponding to the number of matched second cloud distribution data. The first cloud $C_1$ has a cloud $C_{10}$ matched with three cloud distribution data and a cloud $C_{11}$ matched with two cloud distribution data. In FIG. 13, for convenience of explanation, the cloud $C_{10}$ matched to the three cloud distribution data is represented by a black circle, and the cloud $C_{11}$ matched to the two cloud distribution data is represented by a circle having a cross mark.

Cloud recognition

When the cloud distribution data generating module 13 generates cloud distribution data, it is necessary to recognize clouds appearing in the whole sky image. In the present embodiment, as shown in FIG. 2, the cloud determination module 13a is provided, but the present invention is not limited to this, and other cloud determination algorithms may be employed.

An algorithm for determining clouds and sky will be described. The luminance value 255 is white and the luminance value 0 is black. The inventors have found that the luminance value of the blue component and the luminance value of the red component of the cloud are both 0 ~ 255, the luminance value of the blue component of the sky is 0 ~ 255, and the luminance value of the red component of the sky is 0 or almost 0. That is, when the difference between the luminance of the blue component and that of the red component is large, it can be determined that the object is sky, and when the difference between them is small, it can be determined that the object is a cloud.

Therefore, in the present embodiment, the cloud determination module 13a is provided for determining whether or not a plurality of images constituting the whole sky image are clouds based on the luminance of pixels. Specifically, if the difference value obtained by subtracting the luminance of the red component from the luminance of the blue component is less than the predetermined threshold value, the cloud determination module 13a determines that the pixel is a cloud, and if the difference value is equal to or greater than the predetermined threshold value, it determines that the pixel is not a cloud.

Sun removal

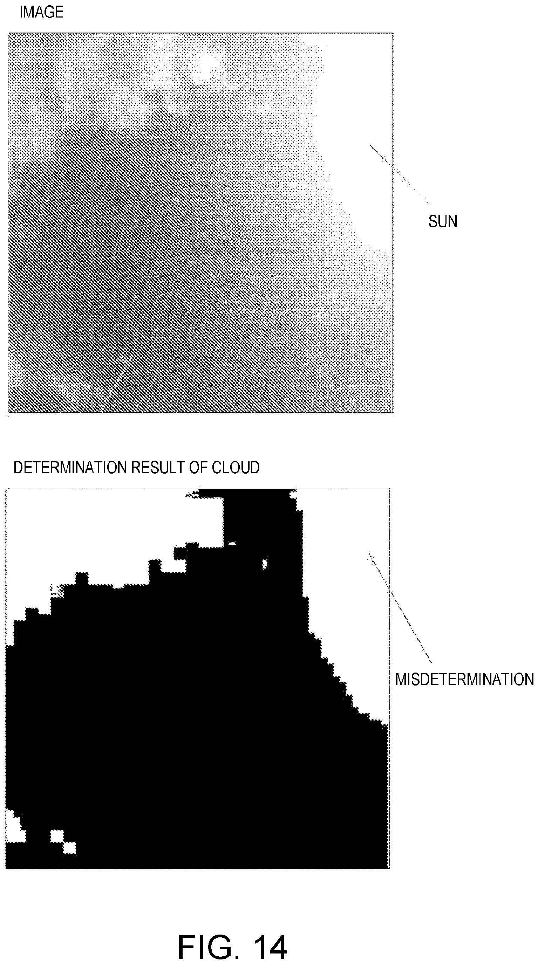

By the way, as shown in FIG. 14, when the sun is reflected in the whole sky image, the sun is also reflected in achromatic color in the same manner as the clouds, so that the identification method of the cloud determination module 13a may erroneously determine that the sun is a cloud. Therefore, the embodiment shown in FIG. 2 includes a sun determination module 13b and a sun removing module 13c. The sun determination module 13b determines that the sun is reflected from a plurality of pixels constituting the whole sky image on the basis of prescribed conditions. The sun removing module 13c removes the pixel (corresponding to the sun) determined by the sun determination module 13b from the pixel (corresponding to the cloud) determined by the cloud determination module 13a.

A first method for determining the sun utilizes astronomy in which the position of a pixel appearing in the whole sky image can be identified based on the camera position (latitude and longitude) and the date and time of imaging. Therefore, the sun determination module 13b determines a pixel that is the sun based on the camera position and the date and time of imaging.

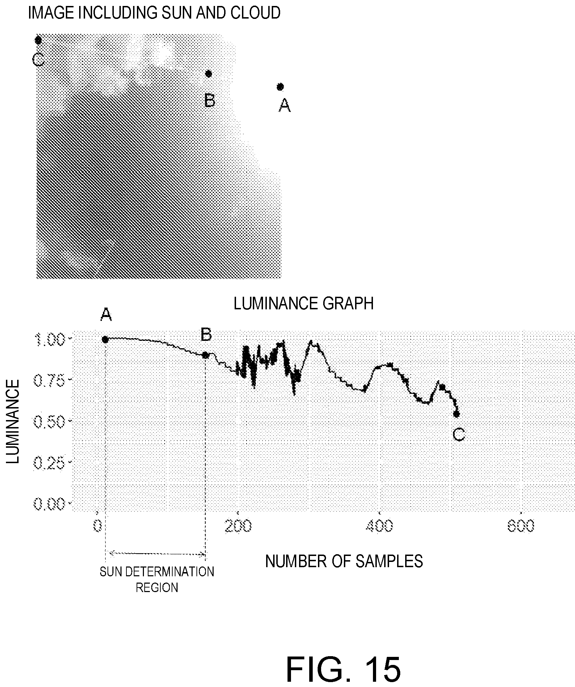

A second method for determining the sun utilizes differences in the luminance characteristics of the sun and clouds. In the upper part of FIG. 15, an image including the sun and points A, B and C in the image are shown. The lower part of the figure shows the distribution of luminance values in the straight line portion from the point A to the point C through the point B. The maximum luminance is at point A which is the center of the sun, and the luminance value gradually decreases as the distance from the center increases. As a difference in the distribution of luminance values between clouds and the sun, a constant decrease in luminance is seen from point A to point B, which is the sky, and an increase or decrease in luminance values (pulsation) is seen from point B to point C, where clouds are reflected, due to reflection of light and unevenness of clouds. Therefore, the difference between the luminance values is used to determine whether or not the sun is present.

Specifically, the sun determination module 13b determines that the sun is a region extending radially from the center of the pixel group in which the luminance in the whole sky image is maximum (point A), and that the region in which the luminance gradually decreases without pulsation as it moves away from the center (point A) and the luminance pulsation starts.

Cloud speed calculation

In order to calculate the cloud speed, as shown in FIG. 2, a cloud information storage module 17a and a cloud speed calculation module 17b may be provided in the cloud observation system 1. The cloud information storage module 17a is a database that stores the position and altitude of the cloud specified by the specifying module 15b in time series. The cloud speed calculation module 17b calculates the moving speed of the cloud based on at least one time change rate of the position and altitude of the cloud stored in the cloud information storage module 17a.

Calculation of shade areas

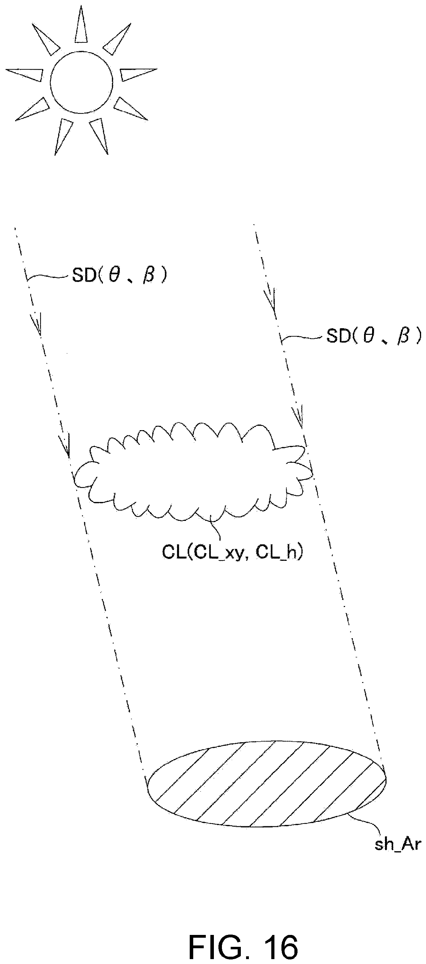

In order to calculate the shade area, as shown in FIG. 2, a sunlight information acquisition module 18a and a shaded area calculation module 18b may be provided. As shown in FIG. 16, the sunlight information acquisition module 18a acquires the direction of sunlight SD. The direction of the sunlight SD can be expressed by an elevation angle $\theta$ and an azimuth $\beta$ with respect to the ground. The sunlight information acquisition module 18a can calculate the direction of the sunlight SD based on the date and time or acquire the direction of the sunlight SD from the outside. The shade area calculation module 18b calculates a shade area of the land Sh_Ar on the basis of the position CL_xy (latitude, longitude, or coordinate) and the altitude CL_h of the cloud specified by the specifying module 15b and the direction of the sunlight SD.

Shade determination for a given land area

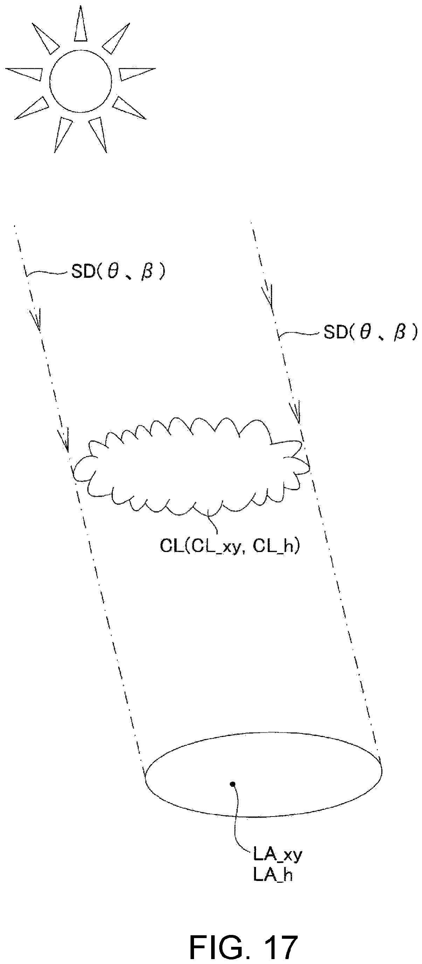

In order to determine whether or not the designated land is shade, as shown in FIG. 2, the sunlight information acquisition module 18a and the shade determination module 18c may be provided. As shown in FIG. 17, the shade determination module 18c calculates information indicating whether or not the designated land is shade based on the position CL_xy and altitude CL_h of the cloud specified by the specifying module 15b, the direction of the sunlight SD, and the position LA_xy and altitude LA_h of the land.

Cloud observation method

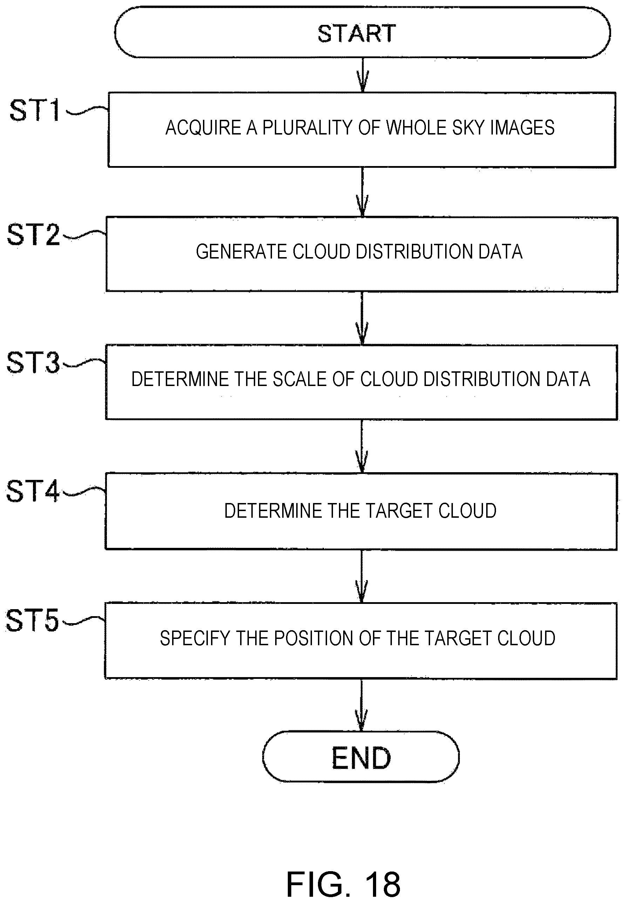

A method executed by the cloud observation system 1 for specifying the position and altitude of clouds will be described with reference to FIG. 18.

First, in step ST1, as shown in FIG. 5, the acquisition module 12 acquires a plurality of whole sky images G3 and G4 imaged by a plurality of whole sky cameras 10 arranged at positions P1 and P2 different from each other where the positional relationship is known.

In the next step ST2, as shown in FIG. 6, the cloud distribution data generating module 13 generates cloud distribution data B3 and B4 representing the distribution of clouds for each of the whole sky images.

In the next step ST3, as shown in FIG. 6, FIG. 7, and FIG. 8, the scale determination module 14 enlarges or reduces the cloud distribution data B3 and B4 to determine the scales in which the clouds in the respective cloud distribution data B3 and B4 existing in the region Ar1 to be evaluated in a state where the known positional relationship is maintained overlap most. FIG. 8 shows cloud distribution data B3 and B4 whose scales have been determined.

In the next step ST4, the target cloud determination module 15a determines a target cloud from clouds included in the respective cloud distribution data B3 and B4 which are enlarged or reduced on the basis of the scale.

In the next step ST5, the specifying module 15b specifies the position (include elevation) of the target cloud on the basis of the cloud distribution data B3 and B4 enlarged or reduced on the basis of the scale, the positional relationships P1 and P2 of the plurality of whole sky cameras 10, the elevation angle $\theta$ of the target cloud with respect to the whole sky camera 10, and the azimuth $\beta$ of the target cloud with respect to the whole sky camera 10.

As described above, the cloud observation device 11 according to the present embodiment comprising, the acquisition module 12 configured to acquire whole sky images G3 and G4 imaged by a plurality of whole sky cameras 10 arranged at positions P1 and P2 different from each other with a known positional relationship, the cloud distribution data generating module 13 is configured to generate cloud distribution data B3 and B4 representing the distribution of clouds for each sky image, the scale determination module 14 is configured to enlarge or reduce the cloud distribution data B3 and B4 to determine a scale at which clouds existing in the evaluation target region Ar1 in a state where the known positional relationship is maintained, most overlap with each other, and the target cloud determining module 15a is configured to determine a target cloud from clouds included in each cloud distribution data B3 and B4 enlarged or reduced on the basis of the scale.

Thus, the cloud distribution data B3 and B4 are enlarged or reduced to determine the scale on which the clouds existing in the evaluation target region Ar1 in the state where the known positional relationship is maintained overlap most, so that the position (including cloud height and horizontal distance) of an arbitrary target cloud can be specified.

The present embodiment further comprising, a specifying module 15b for specifying the position (include elevation) of the target cloud on the basis of the cloud distribution data B3 and B4 enlarged or reduced on the basis of the scale, the positional relationships P1 and P2 of the plurality of whole sky cameras 10, the elevation angle $\theta$ of the target cloud with respect to the whole sky camera 10, and the azimuth $\beta$ of the target cloud with respect to the whole sky camera 10.

With this configuration, the position (include elevation) of the target cloud can be calculated.

In the present embodiment, the scale determination module 14 enlarges or reduces the cloud distribution data B3 and B4 from the whole sky camera position P1 and P2. It is preferred as one embodiment for determining the scale.

In the present embodiment, the scale determination module 14 enlarges or reduces the cloud distribution data B3 and B4 from a point other than the whole sky camera position P1 and P2, and shifts the positional relationship of the whole sky camera in each of the enlarged or reduced cloud distribution data B3 and B4 to match the known positional relationship. It is preferred as one embodiment for determining the scale.

In the embodiment shown in FIG. 8, the evaluation target region Ar1 is a region where the respective cloud distribution data B3 and B4 overlap.

With this configuration, the evaluation target region Ar1 can be easily set.

In the embodiment shown in FIG. 10, further comprising, an arrangement pattern identifying module 14a configured to identify an arrangement pattern of a plurality of cloud masses (bk1 ~ 10) included in the cloud distribution data B5 and B6, wherein the evaluation target region Ar1 is a region including clouds whose arrangement patterns coincide with each other.

With this configuration, when there is a plurality of cloud masses, and clouds (bk1 ~ 2, bk9 ~ 10) that are noise does not match the arrangement pattern are excluded to impove the accuracy of the matching determination of the cloud distribution data.

In the embodiment shown in FIG. 9, the evaluation target region Ar1 is divided into a plurality of unit regions Ar2 arranged in a matrix, a matching value {1-| cloudP1$_{ij}$ - cloudP2$_{ij}$|} indicating whether the presence of clouds overlaps is calculated for each unit region Ar2, and the scale in which the total score_h of the matching values of all the unit regions is the highest is determined.

According to this configuration, since it is determined whether or not the matching value is matched by the matching value of the entire evaluation target region Ar1, and not by the matching value of a part of the region, the smoothed determination can be made even if noise is included.

In the embodiment shown in FIG. 1, FIG. 12 and FIG. 13, further comprising, a cloud image output module 16 configured to output a cloud image showing the distribution of clouds based on the cloud distribution data B7, B8 and B9 whose scales have been determined.

According to this configuration, since the observation result of the cloud can be visually recognized, the user can easily understand it.

In the embodiment shown in FIG. 12 and FIG. 13, the plurality of cloud distribution data includes first cloud distribution data B7 and one or a plurality of second cloud distribution data B8 and B9. The clouds included in the first cloud distribution data B7 include a first cloud $C_1$ matched with at least one of the one or a plurality of second cloud distribution data B8, and B9, and a second cloud $C_2$ not matched with the one or a plurality of second cloud distribution data B8, and B9, and the display modes of the first cloud $C_1$ and the second cloud $C_2$ are different.

According to this configuration, it is useful because it allows the identification of whether the cloud is observed from a plurality of camera positions or is observed from a single camera position.

In the embodiment shown in FIG. 13, the first cloud $C_1$ is displayed in a display mode corresponding to the number of matched second cloud distribution data.

This configuration is useful because the number of observed cameras can be identified.

In the present embodiment, further comprising, the cloud determination module 13a configured to determine that a plurality of pixels constituting the whole sky image are clouds, if a difference value obtained by subtracting the luminance of the red component from the luminance of the blue component is less than a predetermined threshold value, and determines that the pixels are not clouds if the difference value is equal to or greater than the predetermined threshold value.

According to this configuration, since the luminance characteristics of the sky and the cloud are used, it is possible to improve the accuracy of determining the cloud.

The present embodiment further comprising, a sun determination module 13b configured to determine that the sun is reflected from a plurality of pixels constituting the whole sky image on the basis of a predetermined condition, and a sun removing module 13c configured to remove pixels determined to be the sun by the sun determining module 13b, from pixels determined to be clouds by the cloud determining module 13a.

According to this configuration, even when the sun is reflected on the whole sky image, it is possible to suppress or prevent misrecognition of clouds, and it is possible to improve the accuracy of determining clouds.

In the present embodiment shown in FIG. 15, the sun determination module 13b determines that the sun is a region radially extending from the center of the pixel group (point A) in which the luminance in the whole sky image becomes maximum, and in which the luminance gradually decreases without pulsation as the distance from the center and the luminance pulsation starts.

According to this configuration, since the difference in luminance characteristics between the cloud and the sun is utilized, the sun can be appropriately recognized.

In the present embodiment, the sun determination module 13b determines a pixel that is the sun based on the camera position and the date and time of imaging.

According to this configuration, the sun can be determined simply by calculation.

The present embodiment further comprising, a cloud information storage module 17a configured to store the position and altitude of the cloud specified by the specifying module 15b in time series, and a cloud speed calculation module 17b configured to calculate the moving speed of the cloud based on at least one time change rate of the position and altitude of the cloud stored in the cloud information storage module 17a.

According to this configuration, the speed of the cloud, that is, the wind speed at the altitude of the cloud can be calculated.

The embodiment shown in FIG. 1 and FIG. 16, further comprising, a sunlight information acquisition module 18a configured to acquire the direction of sunlight SD, and a shade area calculation module 18b configured to calculate a shade area Sh_Ar of land based on the position CL_xy and the altitude CL_h of the cloud specified by the specifying module 15b and the direction of sunlight SD.

According to this configuration, the shade area Sh Ar can be specified based on the designated parameter.

The embodiment shown in FIG. 1 and FIG. 17, further comprising, a sunlight information acquisition module 18a configured to acquire the direction of the sunlight SD, and a shade determination module 18c configured to calculate information indicating whether a designated land is shade or not based on a position CL_xy and an altitude CL_g of clouds specified by a specifying module 15b, a direction of sunlight SD, and a position of land LA_xy and an altitude LA_h.

According to this configuration, it is possible to specify whether or not the designated land is shade.

The cloud observation system 1 according to the present embodiment comprising, a plurality of whole sky cameras 10 disposed at different positions from each other, and the cloud observation device 11 described above.

The cloud observation method according to the present embodiment, comprising the steps of, acquiring a plurality of whole sky images G3 and G4 imaged by whole sky cameras 10 arranged at mutually different positions P1 and P2 different from each other with a known positional relationship, generating a cloud distribution data B3 and B4 representing the distribution of clouds for each of the whole sky images, enlarging or reducing the cloud distribution data B3 and B4 to determine the scale at which the clouds in each of the cloud distribution data B3 and B4 existing in the evaluation target region Ar1 in the state where the known positional relationship is maintained, most overlap each other, and determining a target cloud from clouds included in each cloud distribution data B3 and B4 enlarged or reduced on the basis of the scale.

Also by this method, it is possible to obtain the effect of the cloud observation device.

The program according to the present embodiment is a program for causing a computer to execute the method.

Although the embodiments of the present disclosure have been described with reference to the drawings, it should be understood that the specific configuration is not limited to these embodiments. The scope of the present disclosure is indicated by the claims as well as the description of the embodiments described above, and further includes all modifications within the meaning and scope of the claims.

For example, the order of execution of each process, such as operations, procedures, steps, and steps in the device, system, program, and method shown in the claims, specification, and drawings, may be realized in any order unless the output of the previous process is used in a later process. Even if the flow in the claims, the description, and the drawings are explained by using "first", "Next", etc. for convenience, it does not mean that it is essential to execute them in this order.

For example, the modules 12, 13, 14, 15a, 15b, 16, 13a, 13b, 13c, 14a, 17a, 17b, 18a, 18b, and 18c shown in FIG. 2 are realized by executing a predetermined program by the CPU of a computer, but the components may be constituted by a dedicated memory or a dedicated circuit.

In the cloud observation system 1 of the present embodiment, the respective modules 12, 13, 14, 15a, 15b, 16, 13a, 13b, 13c, 14a, 17a, 17b, 18a, 18b, 18c are mounted on one computer 11, but the respective modules 10 - 15 may be distributed and mounted on a plurality of computers or clouds.

The structure employed in each of the above embodiments may be employed in any other embodiment. In FIG. 1, the modules 12, 13, 14, 15a, 15b, 16, 13a, 13b, 13c, 14a, 17a, 17b, 18a, 18b, and 18c are mounted for convenience of explanation, but some of them may be arbitrarily omitted. For example, an embodiment in which each module 12 ~

14 is mounted is mentioned.

The specific configuration of each module is not limited to the above-described embodiment, and various modifications can be made without departing from the scope of the present disclosure.

DESCRIPTION OF REFERENCE CHARACTERS

| | |
|---|---|
| 12 | acquisition module |
| 13 | cloud distribution data generating module |
| 13a | cloud determination module |
| 13b | sun determination module |
| 13c | sun removing module |
| 14 | scale determination module |
| 14a | arrangement pattern identifying module |
| 15a | target cloud determination module |
| 15b | specifying module |
| 16 | cloud image output module |
| 17a | cloud information storage module |
| 17b | cloud speed calculation module |
| 18a | sunlight information acquisition module |
| 18b | shade area calculation module |
| 18c | shade determination module |
| Ar1 | evaluation target region |
| Ar2 | unit region |

TERMINOLOGY

It is to be understood that not necessarily all objects or advantages may be achieved in accordance with any particular embodiment described herein. Thus, for example, those skilled in the art will recognize that certain embodiments may be configured to operate in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes one or more computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the embodiment, certain acts, events, or functions of any of the algorithms described herein can be performed in a different sequence, can be added, merged, or left out altogether (e.g., not all described acts or events are necessary for the practice of the algorithms). Moreover, in certain embodiments, acts or events can be performed concurrently, e.g., through multi-threaded processing, interrupt processing, or multiple processors or processor cores or on other parallel architectures, rather than sequentially. In addition, different tasks or processes can be performed by different machines and/or computing systems that can function together.

The various illustrative logical blocks and modules described in connection with the embodiments disclosed herein can be implemented or performed by a machine, such as a processor. A processor can be a microprocessor, but in the alternative, the processor can be a controller, microcontroller, or state machine, combinations of the same, or the like. A processor can include electrical circuitry configured to process computer-executable instructions. In another embodiment, a processor includes an application specific integrated circuit (ASIC), a field programmable gate array (FPGA) or other programmable device that performs logic operations without processing computer-executable instructions. A processor can also be implemented as a combination of computing devices, e.g., a combination of a digital signal processor (DSP) and a microprocessor, a plurality of microprocessors, one or more microprocessors in conjunction with a DSP core, or any other such configuration. Although described herein primarily with respect to digital technology, a processor may also include primarily analog components. For example, some or all of the signal processing algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

Conditional language such as, among others, "can," "could," "might" or "may," unless specifically stated otherwise, are otherwise understood within the context as used in general to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding whether these features, elements and/or steps are included or are to be performed in any particular embodiment.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Any process descriptions, elements or blocks in the flow diagrams described herein and/or depicted in the attached figures should be understood as potentially representing modules, segments, or portions of code which include one or more executable instructions for implementing specific logical functions or elements in the process. Alternate implementations are included within the scope of the embodiments described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C. In addition, even if a specific number of an introduced embodiment recitation is explicitly recited, those skilled in the art will recognize that such recitation should typically be interpreted to mean at least the recited number (e.g., the bare recitation of "two recitations," without other modifiers, typically means at least two recitations, or two or more recitations).

It will be understood by those within the art that, in general, terms used herein, are generally intended as "open" terms (e.g., the term "including" should be interpreted as "including but not limited to," the term "having" should be interpreted as "having at least," the term "includes" should be interpreted as "includes but is not limited to," etc.).

For expository purposes, the term "horizontal" as used herein is defined as a plane parallel to the plane or surface of the floor of the area in which the system being described is used or the method being described is performed, regardless of its orientation. The term "floor" can be interchanged with the term "ground" or "water surface." The term "vertical" refers to a direction perpendicular to the horizontal as just defined. Terms such as "above," "below," "bottom," "top," "side," "higher," "lower," "upper," "over," and "under," are defined with respect to the horizontal plane.

As used herein, the terms "attached," "connected," "mated," and other such relational terms should be construed, unless otherwise noted, to include removable, moveable, fixed, adjustable, and/or releasable connections or attachments. The connections/attachments can include direct connections and/or connections having intermediate structure between the two components discussed.

Unless otherwise noted, numbers preceded by a term such as "approximately," "about," and "substantially" as used herein include the recited numbers, and also represent an amount close to the stated amount that still performs a desired function or achieves a desired result. For example, the terms "approximately," "about," and "substantially" may refer to an amount that is within less than 10% of the stated amount. Features of embodiments disclosed herein preceded by a term such as "approximately," "about," and "substantially" as used herein represent the feature with some variability that still performs a desired function or achieves a desired result for that feature.

It should be emphasized that many variations and modifications may be made to the above-described embodiments, the elements of which are to be understood as being among other acceptable examples. All such modifications and variations are intended to be included herein within the scope of this disclosure and protected by the following claims.

**Claims**

**1.** A cloud observation device, comprising:

an acquisition module configured to acquire a plurality of whole sky images, each imaged by each of a plurality of whole sky cameras arranged at positions different from each other with a known positional relationship;
a cloud distribution data generating module configured to generate a plurality of cloud distribution data, each representing the distribution of clouds for each of the plurality of whole sky images;
a scale determination module configured to enlarge or reduce the plurality of cloud distribution data to determine a scale at which the clouds in each of the cloud distribution data exist in an evaluation target region in a state where the known positional relationship is maintained, and mostly overlap with each other; and
a target cloud determination module configured to determine a target cloud from clouds included in each cloud distribution data enlarged or reduced on the basis of the scale.

2. The cloud observation device of claim 1, further comprising:
a specifying module configured to specify a position of the target cloud on the basis of the plurality of cloud distribution data enlarged or reduced on the basis of the scale, a positional relationship of the plurality of whole sky cameras, an elevation angle of the target cloud with respect to corresponding whole sky camera, and an azimuth of the target cloud with respect to corresponding whole sky camera.

3. The cloud observation device of claim 1 or 2, wherein:
the scale determination module enlarges or reduces each cloud distribution data with corresponding whole sky camera position as a base point.

4. The cloud observation device of claim 1 or 2, wherein:
the scale determination module enlarges or reduces each cloud distribution data from a point other than corresponding whole sky camera position, and shifts a positional relationship of corresponding whole sky camera in each of an enlarged or reduced cloud distribution data to match the known positional relationship.

5. The cloud observation device of any one of claims 1 to 4, wherein:
the evaluation target region is a region where the plurality of cloud distribution data overlap.

6. The cloud observation device of any one of claims 1 to 4, further comprising:

an arrangement pattern identifying module configured to identify an arrangement pattern of a plurality of cloud masses included in the plurality of cloud distribution data,
wherein:
the evaluation target region is a region including clouds whose arrangement patterns coincide with each other.

7. The cloud observation device of any one of claims 1 to 6, wherein:
the cloud observation device divides the evaluation target region into a plurality of unit regions arranged in a matrix shape, calculates a matching value for each unit region to determine whether the presence of clouds overlaps, and determines a scale in which a sum of matching values of the unit regions is the highest.

8. The cloud observation device of any one of claims 1 to 7, further comprising:
a cloud image output module configured to output a cloud image showing a distribution of clouds on a basis of the plurality of cloud distribution data whose scale is determined.

9. The cloud observation device of claim 8, wherein:

the plurality of cloud distribution data includes first cloud distribution data and one or a plurality of second cloud distribution data,
a cloud included in the first cloud distribution data includes a first cloud matched with at least one of the one or a plurality of second cloud distribution data, and a second cloud unmatched with the one or a plurality of second cloud distribution data, and
the cloud observation device has different display modes of the first cloud and the second cloud.

10. The cloud observation device of claim 9, wherein:
the first cloud is displayed in a display mode corresponding to a number of matched second cloud distribution data.

11. The cloud observation device of any one of claims 1 to 10, further comprising:
a cloud determination module configured to determine that a plurality of pixels constituting a whole sky image are clouds if a difference value obtained by subtracting a luminance of a red component from a luminance of a blue component is less than a predetermined threshold value, and determine that the pixels are not clouds if the difference value is not less than the predetermined threshold value.

12. The cloud observation device of claim 11, further comprising:

a sun determination module configured to determine that the sun is reflected from a plurality of pixels constituting the whole sky image on a basis of a predetermined condition; and

a sun removing module configured to remove pixels determined to be the sun by the sun determination module from pixels determined to be the cloud by the cloud determination module.

13. The cloud observation device of claim 12, wherein:
   the sun determination module determines that a region extending radially from the center of a pixel group having the maximum luminance in the whole sky image is the sun, and where the luminance gradually decreases without pulsation with the distance from the center and the pulsation of the luminance starts.

14. The cloud observation device of claim 12, wherein:
   the sun determination module determines a pixel as the sun based on a camera position and a date and a time of imaging.

15. The cloud observation device of any one of claims 1 to 14, further comprising:

   a cloud information storage module configured to store a position and an altitude of a cloud specified by the specifying module in time series; and
   a cloud speed calculation module configured to calculate a moving speed of the cloud based on at least one time change rate of the position and the altitude of the cloud stored in the cloud information storage module.

16. The cloud observation device of any one of claims 1 to 15, further comprising:

   a sunlight information acquisition module configured to acquire a direction of sunlight; and
   a shade area calculation module configured to calculate a shade area of land based on the position and altitude of the cloud specified by the specifying module and the direction of the sunlight.

17. The cloud observation device of any one of claims 1 to 16, further comprising:

   a sunlight information acquisition module configured to acquire the direction of sunlight; and
   a shade determination module configured to calculate information indicating whether a designated land is a shade based on the position and altitude of the cloud specified by the specifying module, the direction of the sunlight, and a position and an altitude of the designated land.

18. A cloud observation method, comprising the steps of:

   acquiring a plurality of whole sky images, each imaged by each of a plurality of whole sky cameras arranged at positions different from each other with a known positional relationship;
   generating a plurality of cloud distribution data, each representing the distribution of clouds for each of the plurality of whole sky images;
   enlarging or reducing the cloud distribution data to determine a scale at which the clouds in each of the cloud distribution data exist in an evaluation target region in a state where the known positional relationship is maintained, and mostly overlap with each other; and
   determining a target cloud from clouds included in each cloud distribution data enlarged or reduced on the basis of the scale.

19. A cloud observation system comprising:

   a plurality of whole sky cameras arranged at different positions from each other; and
   a cloud observation device of any one of claims 1 to 17.

20. A program that causes a computer to execute the method of claim 18.

FIG. 1

FIG. 2

COMPUTER (CLOUD OBSERVATION DEVICE))

12 — ACQUISITION MODULE

CLOUD DETERMINATION MODULE — 13a

SUN DETERMINATION MODULE — 13b

SUN REMOVING MODULE — 13c

13 — CLOUD DISTRIBUTION DATA GENERATING MODULE

14 — SCALE DETERMINATION MODULE

ARRANGEMENT PATTERN IDENTIFYING MODULE — 14a

CLOUD INFORMATION STORAGE MODULE — 17a

15a — TARGET CLOUD DETERMINATION MODULE

CLOUD SPEED CALCULATION MODULE — 17b

SUNLIGHT INFORMATION ACQUISITION MODULE — 18a

15b — SPECIFYING MODULE

SHADE AREA CALCULATION MODULE — 18b

16 — CLOUD IMAGE OUTPUT MODULE

SHADE DETERMINATION MODULE — 18c

11b

11a

11

CLOUD ALTITUDE : LOW

WHOLE SKY IMAGE G1

CLOUD DISTRIBUTION DATA ON AN APPROPRIATE SCALE

# FIG. 3

CLOUD ALTITUDE : HIGH

WHOLE SKY IMAGE G2

CLOUD DISTRIBUTION DATA ON AN APPROPRIATE SCALE

# FIG. 4

FIG. 5

SCALE : SMALL

FIG. 6

SCALE : LARGE

B3

P1

P2

B4

# FIG. 7

SCALE : APPROPRIATE

FIG. 8

$i = 5, j = 4$

$cloudP1_{ij} = 0$

$cloudP2_{ij} = 1$

# FIG. 9

FIG. 10

FIG. 11

FIG. 12

FIG. 13

IMAGE

SUN

DETERMINATION RESULT OF CLOUD

MISDETERMINATION

# FIG. 14

IMAGE INCLUDING SUN AND CLOUD

LUMINANCE GRAPH

SUN DETERMINATION
REGION

NUMBER OF SAMPLES

FIG. 15

SD($\theta$、$\beta$)

SD($\theta$、$\beta$)

CL(CL_xy, CL_h)

sh_Ar

FIG. 16

SD($\theta$、$\beta$)

SD($\theta$、$\beta$)

CL(CL_xy, CL_h)

LA_xy
LA_h

FIG. 17

START

ST1 — ACQUIRE A PLURALITY OF WHOLE SKY IMAGES

ST2 — GENERATE CLOUD DISTRIBUTION DATA

ST3 — DETERMINE THE SCALE OF CLOUD DISTRIBUTION DATA

ST4 — DETERMINE THE TARGET CLOUD

ST5 — SPECIFY THE POSITION OF THE TARGET CLOUD

END

FIG. 18

**INTERNATIONAL SEARCH REPORT**

| International application No. |
| --- |
| PCT/JP2019/019019 |

**A. CLASSIFICATION OF SUBJECT MATTER**
Int.Cl. G01W1/00(2006.01)i, G01W1/12(2006.01)i

According to International Patent Classification (IPC) or to both national classification and IPC

**B. FIELDS SEARCHED**

Minimum documentation searched (classification system followed by classification symbols)
Int.Cl. G01W1/00, G01W1/12

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | 橋本 公樹 ほか，太陽光発電への応用を目指した雲の三次元位置計測，自動制御連合講演会講演論文集 第54回自動制御連合講演会，2011, pp. 1362-1365, (HASHIMOTO, Koki et al., "Three-dimensional position measurement of cloud for solar power generation", Proceedings of the Japan Joint Automatic Control Conference, THE 54TH JAPAN JOINT AUTOMATIC CONTROL CONFERENCE) | 1-20 |
| A | TAKASHIMA, Tsutomu et al., Cloud Height Determination by Satellite Stereography, 気象研究所研究報告, 1982, 33 (2), pp. 65-78, (Papers in meteorology and geophysics) | 1-20 |

| ☐ | Further documents are listed in the continuation of Box C. | ☐ | See patent family annex. |
| --- | --- | --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 18 July 2019 (18.07.2019) | 30 July 2019 (30.07.2019) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 3 812 800 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012242322 A